# EUROPEAN PATENT SPECIFICATION

(11) **EP 0 934 362 B1**
(45) Date of publication and mention of the grant of the patent: **27.02.2002**
(21) Application number: 97912220.7
(22) Date of filing: 20.10.1997
(51) Int. Cl.: C08L 97/02, B27N 1/00

(54) **TREATMENT OF LIGNOCELLULOSIC MATERIAL**
BEHANDLUNG VON LIGNOCELLULOSEMATERIALIEN
TRAITEMENT DE MATIERE LIGNOCELLULOSIQUE

(30) Priority: 18.10.1996 EP 96307600
(43) Date of publication of application: 11.08.1999
(73) Proprietor: Kronospan GmbH, 32839 Steinheim (DE); K.C. SHEN INTERNATIONAL LTD., Bridgetown (BB)
(72) Inventor: SHEN, Kuo, Cheng, Ottawa, Ontario K1J 8K1 (CA)
(74) Representative: Seaborn, George Stephen
(86) International application number: EP9705915
(87) International publication number: WO9817727

(56) References cited:
- EP-A- 0 161 766
- EP-A- 0 492 016
- FR-A- 2 536 334
- GB-A- 925 524
- GB-A- 925 525
- GB-A- 1 197 965
- PATENT ABSTRACTS OF JAPAN vol. 18, no. 422 (M-1651), 8 August 1994 & JP 06 126715 A (RURIKO OOTA), 10 May 1994, & DATABASE WPI Week 9423 Derwent Publications Ltd., London, GB; AN 188331

## Description

The present invention relates to the treatment of lignocellulosic material. In particular, but not exclusively, the invention relates to the production of composite material and to the production of thermosetting resin adhesive.

European patent specifications nos. 0161766 and 0492016 describe the treatment of lignocellulosic material with steam to decompose and hydrolyze hemicellulose into low molecular weight water-soluble resin material including sugars (pentose and hexose), sugar polymers, furfura], dehydrated carbohydrates, organic acids and other decomposition products.

The latter European patent specification also describes the treatment of lignocellulosic material, which has been treated with steam to decompose and hydrolyze hemicellulose in the manner referred to above, to decompose and hydrolyze cellulose into low molecular weight water-soluble resin material as referred to above.

As described in both of the aforementioned European patent specifications, the lignocellulosic material after decomposition of the hemicellulose, may be formed, optionally together with other particulate or subdivided material, into a mat and the decomposition products thermoset thereby to produce a reconstituted composite product.

Similarly as described in European patent specification no. 0429016 the lignocellulosic material after decomposition and hydrolysis of the cellulose, may be formed, optionally together with other particulate or subdivided material, into a mat and the decomposition products thermoset thereby to produce a reconstituted composite product.

The decomposition products from the decomposition and hydrolysis of the hemicellulose or cellulose may be separated from the lignocellulosic material, optionally concentrated or dried, and used as a thermosetting resin adhesive; e.g. in the production of composite products.

European patent specification nos. 0161766 and 0492016 disclose that the lignin fraction of the lignocellulosic material may also be decomposed and hydrolyzed into low molecular weight lignin and lignin decomposition products.

Both of the aforementioned European patent specifications disclose adding acid, as catalyst, to the lignocellulosic material to be treated with steam to decompose and hydrolyze hemicellulose. Specification no. 0492016 also discloses the addition of acid, as catalyst, to lignocellulosic material, wherein the hemicellulose has already been hydrolyzed, prior to treatment of the lignocellulosic material to decompose and hydrolyze cellulose. The lignocellulosic material, at least when hemicellulose is to be decomposed and hydrolysed, remains in contact with the acid prior to the steam treatment for a sufficiently long period of time for the acid to penetrate throughout substantially the entire volume of each particle of lignocellulosic material whereby the material is uniformly decomposed and hydrolysed during the steam treatment.

The cited prior art mentions in several occasions the use of significant amounts of sulfuric acid for the treatment of lignocellulose material. Prior art document UK -A- 925,524 mentions the preferred use of inorganic acids in an amount of 0.5 to 10 % by weight. Prior art document EP -A- 0 161 766 describes in one particular example the use of 0.4 % by weight of sulfuric acid. Prior art document UK -A-1,197,965 mentions the use of sulfuric acid in an amount of from 1 - 4 %. Prior art document UK -A- 925,525 does not deal directly with the use of sulfuric acid, but describes the use of sulfur dioxide gas under superatmospheric conditions which would also imply the use of significant amounts of an acid catalyst.

We have now discovered that an excessive amount of acid reduces the mechanical strength of reconstituted composite products prepared from the treated lignocellulosic material. In particular we have now discovered that by use of a controlled amount of acid within a specific range the properties of reconstituted composite products prepared from the lignocellulosic material may be controlled to be within optimum or desirable ranges and the properties of composite products made using thermosetting resin adhesive separated from the lignocellulosic materials may also be controlled to be within optimum or desirable ranges.

We have also discovered that the use of acid within a specific range may also affect manufacturing parameters of reconstituted composite products. In particular, the use of a controlled amount of acid within a specific range may also result in increased flexibility with respect to press temperature and time.

We have also discovered that by treating the particulate lignocellulosic material with add but effecting decomposition and hydrolysis of the hemicellulose and/or cellulose of the particulate lignocellulosic material without the acid having penetrated to the core of the particles, a composite product of improved strength can be prepared from the treated lignocellulosic material.

In a first aspect the present invention provides a method of treating subdivided or particulate lignocellulosic material with stearn at a temperature and a pressure high enough and for a time sufficient to effect decomposition and hydrolysis of hemicellulose into water soluble resin material such as pentose and hexose sugars, sugar polymers, furfural, hydroxymethyl furfural, dehydrated carbohydrates and organic acids, characterized in that the steam treatment is effected, at least during part of its duration, in the presence of an acidic catalyst.

The acidic catalyst is mixed with the lignocellulosic material before the steam treatment, meaning that the method according to the first aspect of the invention comprises an initial treatment with an acid catalyst and a subsequent treatment with steam.

The acidic catalyst is an acid or sulfur dioxide.

In a second aspect the present invention provides a method for the treatment of subdivided or particulate lignocellulosic material prepared according to the method of the first aspect of the invention, whereby a water-soluble fraction is optionally being separated from the subdivided or particulate lignocellulosic material before the beginning of the treatment, consisting of a first treatment of the lignocellulosic material with a product selected from the group consisting of acids, sulfur dioxide and acid salts, and a second treatment with steam.

If decomposition and hydrolysis of cellulose is to be effected, then the lignocellulosic material is a lignocellulosic material, the hemicellulose of which has already been hydrolyzed and decomposed in accordance with the present invention.

Reonstituted products having desirable properties may be prepared from the treated lignocellulosic material. It is not suggested that any individual parameter of the composite products are necessarily optimised but merely that the respective values of a number of such parameters are within desirable ranges. Such parameters may be, for example, resistance to swelling in the presence of moisture or liquid water, internal bond strength, bending strength and stiffness, lightness of colour, low odourousness, and machineability.

In particular reconstituted composite products of good strength and low odour can be obtained.

The decomposition products, i.e. the water soluble resin material, may be used as a thermosetting adhesive, e.g. either in the production of the above-mentioned composite material from the treated lignocellulosic material or in the production of other composite material or for other purposes.

When only hemicellulose is to be hydrolysed the amount of sulfuric acid is at least 0.05%, more preferably 0.10%, and preferably is in the range 0.10 to 0.35%. Even more preferably the amount of acid does not exceed 0.30%.

The percentage amounts of sulfuric acid and other acidic catalysts given herein are by weight and are based on the dry (oven dry) weight of the lignocellulosic material. The percentage amounts of sulfuric acid are calculated as 100% sulfuric acid.

Preferably when cellulose is to be hydrolysed, as in the second aspect of the invention, dilute sulfuric acid is added to lignocellulosic material to give a mixture containing 0.5 to 5% sulfuric acid.

Alternatively, instead of sulfuric acid, an equivalent amount of another acid may be used.

By an amount of acid equivalent to an amount of sulfuric acid we mean an amount of the first-mentioned acid providing the same number of H⁺ ions as said amount of sulfuric acid, assuming that both the first-mentioned acid and the sulfuric acid fully dissociate.

As mentioned above, sulfur dioxide or an acidic salt may be used as the acidic catalyst. Sulphur dioxide reacts with steam to produce suiphurous acid and may react further with components of the lignocellulosic material to produce other acids.

The amount of sulfur dioxide used is preferably 0.5 to 5% or 1.0 to 4.0%.

The acidic salt may be ammonium sulfate. Preferably ammonium sulfate is used in an amount of 0.10 to 10%, preferably 0.25 to 10%, more preferably 1.0 to 8.0%.

In practice, the amount of acid catalyst should be adjusted according to the buffer capacity or ash content of the lignocellulosic material. Certain wood species and agricultural plants are well known for their high content of ash or alkalinity. The natural alkalinity in lignocellulose material causes a significant loss of acid that must be considered when calculating the acidic catalyst requirements.

Preferably the acidic catalyst is mixed with the lignocellulosic material to provide a pH within the range of 1.0 to 5.0, even more preferably, 2.0 to 4.5 and most preferably 2.5 to 3.5, at the beginning of the steam treatment.

Preferably the steam treatment is carried out at a temperature not exceeding 220 degrees C, and preferably not exceeding 210 degrees C.

Preferably the steam treatment is carried out for a time not exceeding 90 minutes.

Preferably the amount of acid used and the conditions of steam treatment are such that the amount of water solubles produced is greater than 15%, more preferably 20%, of the initial dry weight (before any decomposition and hydrolysis of any hemicellulose) of the lignocellulosic material and preferably the pentosan content of such water solubles exceeds 10% by weight based on the dry weight of the lignocellulosic material.

When hemicellulose is to be hydrolyzed, the acidic catalyst reduces undesired hydrolysis of cellulose thereby increasing the strength of composite material made from the treated lignocellulose material. Also the acidic catalyst facilitates the extraction and increases the yield of the water soluble resin material.

The acidic catalyst unexpectedly results in the treated lignoceilulosic material being lighter in colour and less odorous, thus enabling a composite product which is lighter in colour and less odourous to be prepared from the treated lignocelulosic material. These characteristics are desirable qualities for commercial products.

When the acidic catalyst is sulfuric acid it is preferably used in aqueous solution at a concentration not exceeding 10% by weight, of H₂SO₄, and more preferably at a concentration not exceeding 5.0%. The concentration is mainly determined by the amount of acid to be used and size, shape and initial moisture content of the particles of lignocellulosic material. However, it should be noted that low concentration of acid solution always adds more water to the lignocellulosic material, thereby consuming more thermal energy to be required for the steam treatment.

The acid may be added to the whole bulk of the lignocellulosic material to be treated or may be added only to a part of that bulk, that part and the remaining bulk of the lignocellulosic material being mixed together either during the steam treatment or subsequent thereto but prior to formation of composite products from the treated lignocellulosic material or extraction of the water soluble resin material from the lignocellulosic material.

It will be appreciated that if the acidic catalyst is added only to a part of the bulk of the lignocellulosic material, then the percentage amounts of acidic catalyst given above relate to that part and not the whole bulk.

In accordance with a further aspect of the method of the present invention there is provided a method of treating subdivided or particulate lignoceiiulosic material with steam at a temperature and a pressure high enough and for a time sufficient to effect decomposition and hydrolysis of hemicellulose and/or cellulose into water soluble resin material such as pentose and hexose sugars, sugar polymers, dehydrated carbohydrates, furfural, hydroxymethyl furfural and organic acids, wherein acid is applied to the lignocellulosic material in subdivided or particulate form prior to and/or during decomposition and hydrolysis and the lignocellulosic material remains in contact with the acid prior to and/or during decomposition and hydrolysis for a time insufficient to allow the acid to penetrate to the core of the particles of lignocellulosic material before cessation of the decomposition and hydrolysis so that cellulose fibres in the core of the particles are not substantially degraded by the steam treatment.

Reconstituted products may be prepared from the treated lignocellulosic material.

A stronger composite product can be produced from the treated lignocellulosic material than if the acid had penetrated to the core of the particles resulting in the cellulosic fibres throughout the particles being degraded by the steam treatment.

The decomposition products, i.e. the water soluble resin material, may be used as a thermosetting adhesive, e.g. either in the production of the above-mentioned composite material from the treated lignocellulosic material or in the production of other composite materials or for other purposes.

The acid may be applied to the lignocellulosic material by soaking the particles in an acid solution or spraying the particles with an acid solution.

The steam treatment may be carried out in a pressure vessel (often referred to as a cooker or a digester). The extraction of the treated material from the pressure vessel can be slow and gentle or in an instant release, resulting in an explosive discharge, which renders the treated lignocellulosic material in fibrous and particulate form.

After the steam treatment the particles of lignocellulosic material may be broken down into fibres, or fine particles by means of refining or hammermilling, prior to reconstitution as a composite product, so that the "well cooked" exterior parts of the lignocellulosic material (i.e. the parts wherein the cellulose fibres have been degraded or broken down) are well mixed with the "undercooked" core parts of the lignocellulosic material (i.e. the parts wherein the cellulosic fibres have not been broken down due to lack acid).

The well cooked parts of the particles provide resin for binding the composite product together whilst the undercooked parts of the particles provide substantially undamaged cellulose fibres for strengthening the composite product, thus also resulting in a composite product being lighter in colour and less odourous.

The above-described further aspect of the invention enables the waste water problem that otherwise arises if the lignocellulose particles are impregnated with acid solution to be eliminated since no waste water is produced with the *in situ* addition of acid solution.

Alternatively to obtain differently "cooked" portions of lignocellulosic material would require the separate production and treatment of lignocellulosic material to produce well cooked particles and treatment of lignocellulosic material to produce undercooked particles and this would require extra production steps and/or equipment.

In all aspects of the inventive method, the treatment of the lignocellulosic material may be effected as a continuous process or as a batch process.

It will be understood that the different aspects of the invention are not mutually exclusive. A preferred process in accordance with the invention is in accordance with both the first or second aspect of the invention and the further aspect of the invention.

A preferred method in accordance with the present invention comprises the following steps in the order given below:
(a) bringing lignocellulosic material in the presence of an acidic catalyst into contact with steam at a pressure and temperature sufficiently high and for a time sufficient to decompose and hydrolyze hemicellulose contained in the lignocellulosic material into low molecular weight water soluble resin material including pentose and hexose sugars, sugar polymers, furfural, hydroxymethyl furfural, dehydrated carbohydrate, organic acids and other decomposition products, with negligible degradation of cellulose and no carbonization of the lignocellulosic material; and
(b) separating at least a portion of the water soluble resin material from the lignocellulosic material and optionally concentrating or drying the separated resin material.
   This preferred method may also comprise, after step (b):
(c) bringing the remaining lignocellulosic material in the presence of an acidic catalyst into contact with steam at a pressure and at a temperature sufficiently high and for a time sufficient to decompose and hydrolyze cellulose contained in the lignocellulosic material into low molecular weight water soluble resin material including pentose and hexose sugars, sugar polymers, furfural, hydroxymethyl furfural, dehydrated carbohydrate, organic acid and other decomposition products, with no significant carbonization of the lignocellulosic material; and
(d) optionally separating at least a portion of the resin material from the lignocellulosic material and optionally concentrating or drying the separated material.

The separated resin material from steps (b) and (d) is suitable for use, separately or in admixture (i.e. together), as a waterproof thermosetting resin adhesive.

The lignocellulosic material from steps (a) and (c), optionally after separation of resin material in steps (b) and (d) respectively, may be formed, separately or in admixture, and alone or in combination with other lignocellulosic material into a reconstituted composite material.

To form the treated lignocellulose material into a composite product it may, together with thermosetting water soluble resin material from the decomposition of the hemicellulose or cellulose be formed into a mat and the mat pressed at temperature not exceeding that at which the mat would char at a pressure and for a time sufficient to thermoset the resin to adhesively bond together the lignocellulose material.

In both aspects of the invention, lignin of the lignocellulosic material may be decomposed and hydrolysed by the high pressure steam into low molecular weight lignin and lignin decomposition products and the water soluble resin material derived from decomposition and hydrolysis of hemicellulose and/or cellulose may contain such water soluble low molecular weight lignin and lignin decomposition products.

The invention is illustrated by the following examples.

Examples 1 to 5 relate to the first aspect of the inventive method.

Example 6 relales to the second aspect of the inventive method.

Examples 7 relates to the further aspect of the inventive method.

Abbreviations used in the examples have the following meanings:

| | |
|---|---|
| MOR | Modulus of rupture |
| MOE | Modulus of elasticity |
| IB | Internal bond strength |
| MDF | Medium density fibreboard |
| OD | Oven dry |

### Example 1

This example demonstrates the use of acidic catalyst to hydrolyze and decompose the hemicellulose portion of Aspen poplar sawdust and extract the water soluble resin material for use as a thermosetting liquid adhesive for bonding waferboard.

Fresh poplar sawdust (3.2 mm mesh size) with a moisture content (M.C.) of about 100%, O.D. weight was treated with high pressure steam at 32 bar (470 psi, or 240°C) for 30, 60, 90 and 120 seconds respectively. A second batch of the same Aspen poplar sawdust was impregnated with dilute sulfuric acid to contain 0.2 gram of H₂SO₄ per 100 grams of oven dry sawdust, stored for 6 hours to ensure the acid reached equilibrium in the sawdust and then treated with high pressure steam at 22 bar (322 psi, 220°C) for 30, 60, 90 and 120 seconds respectively. Eight steam treatments were applied to the acidified and non-acidified poplar sawdust. Pentosan analysis (TAPPI Standard Method: T2230S-71) was performed on each treatment of poplar sawdust along with the mass recovered, water solubles and pH value. The results are recorded in Table 1.

**Table 1**

| Water soluble resin material and pentosan content of hydrolyzed Poplar sawdust (percentage based on original O.D. weight of Poplar sawdust) | | | | | |
|---|---|---|---|---|---|
| Steam temperature | Mass recovered after steaming | Pentosan in mass | Water solubles | Pentosan in water solubles | pH of water solubles |
| [seconds] | [%] | [%] | [%] | [%] | |
| at 240 °C | | | | | |
| 30" no acid | 95.8 | 16.1 | 19.2 | 8.6 | 3.57 |
| 60" no acid | 94.6 | 15.2 | 19.6 | 9.2 | 3.54 |
| 90" no acid | 93.2 | 13.7 | 18.1 | 9.7 | 3.43 |
| 120" uo acid | 90.1 | 12.2 | 17.3 | 7.8 | 3.34 |
| | (93.4) | (14.3) | (18.6) | (8.9) | (3.45) |

| at 220 °C | | | | | |
|---|---|---|---|---|---|
| 30" + 0.2 % acid | 94.6 | 15.5 | 24.3 | 11.6 | 3.18 |
| 60" + 0.2 % acid | 93.4 | 15.2 | 25.6 | 12.0 | 3.05 |
| 90" + 0.2 % acid | 91.7 | 14.3 | 26.5 | 11.2 | 2.92 |
| 120" + 0.2 % | 89.2 | 13.1 | 25.1 | 10.3 | 2.86 |
| acid | | | | | |
| | (92.2) | (14.5) | (25.4) | (11.4) | (3.00) |
| * Aspen poplar sawdust contains 19.2 % pentosan by weight of original O.D. weight of sawdust. | | | | | |

It can be seen from Table 1 that the pentosan content of the acidified and non-acidified sawdust treated for the same steaming time is very similar. Poplar sawdust treated with H₂SO₄ at 220°C and with H₂SO₄ at 240°C showed almost identical degrees of hemicellulose decomposition when treated with identical steaming times. This indicates that about the same degree of hemicellulose decomposition occurred under the acidified and non-acidified steam treatments. However, the average water solubles extracted from the acid catalyzed poplar sawdust was 25.4%, based on the original O.D. weight of sawdust as compared to 18.6% water solubles extracted from non-acidified poplar sawdust; a significant difference in yield of 37.0%. Surprisingly, the average pentosan content in the water solubles extracted from the acid catalyzed poplar sawdust was 11.4% as compared to 8.9% for the non-acidified poplar sawdust. This difference in pentosan content between the acidified and non-acidified sawdust was about 28.0%. These higher percentages exemplify the advantages of using acid catalyst in that a higher yield of pentosan can be obtained from the same poplar sawdust. In this present invention, pentosan is one of the essential bonding components of the thermosetting resin adhesive.

It may be noted that the water soluble resin material also contains a small portion of low molecular weight lignin and lignin decomposition products which are soluble in acidic aqueous. The effects of lignin products in the water soluble resin material are not known.

Water soluble resin material, extracted from poplar sawdust treated with and without acid catalyst and steamed for various times, was concentrated under vacuum to liquid resin adhesive, with a solids content of about 55.0% for bonding waferboard. Commercial poplar wafers were sprayed with 10.0% (solids basis) of the liquid resin adhesive, and 1.0% (solids basis) emulsified paraffin wax, based on O.D. weight of poplar wafers. The resinated wafers were dried to a M.C. of about 3 - 4% for making waferboards. One panelboard (600 x 600 x 11.1 mm) was made from each of the liquid resin adhesives with a target density of 670 Kg/M³ (42 pcf) density. One press temperature of 230°C, combined with a press time of 10 minutes and an initial pressure of 34 kg/cm² (500 psi) was used to manufacture eight waferboards.

The waferboards were conditioned for 3 days and tested in accordance with CAN3-0188.3-78 method. Their physical properties are listed in Table 2.

**Table 2**

| Physical properties of 11.1 mm poplar waferboard bonded with 10 % liquid resin adhesive derived from poplar sawdust | | | | | | | |
|---|---|---|---|---|---|---|---|
| Resin | Board | | MOR | MOE | IB | Thickuess swelling | |
| treatment | density | dry | boil | | | soak | boil |
| [°C/seconds] | [kg/M'] | [MPa] | [MPa] | [MPa] | [kPa] | [%] | [%] |
| Resin adhesive catalyzed with 0.2 % acid | | | | | | | |
| 220/30" | 672 | 24.2 | 7.5 | 5470 | 550 | 9.2 | 17.8 |
| 220/60" | 669 | 23.7 | 10.3 | 5620 | 620 | 7.8 | 14.3 |
| 220/90" | 677 | 25.4 | 11.7 | 5780 | 670 | 6.2 | 12.6 |
| 220/120" | 667 | 23.8 | 13.6 | 5820 | 680 | 5.9 | 12.2 |
| | (671) | (24.3) | (10.8) | (5670) | (640) | (7.3) | (14.2) |

| Resin adhesive non-acid catalyzed | | | | | | | |
|---|---|---|---|---|---|---|---|
| 240/30" | 668 | 21.6 | 5.1 | 4830 | 480 | 14.3 | 25.6 |
| 240/60" | 672 | 23.2 | 8.8 | 5280 | 560 | 11.4 | 21.2 |
| 240/90" | 675 | 24.3 | 9.7 | 5330 | 630 | 9.7 | 17.5 |
| 240/120" | 676 | 24.8 | 11.6 | 5470 | 640 | 7.2 | 14.7 |
| | (672) | (23.4) | (9.0) | (5210) | (580) | (10.7) | (19.8) |
| | | | | | | | |
| CSA standard CAN 3-0437.0M86 | | 17.2 | 8.6 | 3100 | 345 | 25 | |

As can be seen from Table 2, the physical properties of poplar waferboards bonded with acid catalyzed resin adhesive are better than those of waferboards bonded with non-acidified resin adhesive. Of particular interest is the relatively higher wet bending strength (MOR), and stiffness (MOE) and lower thickness swelling of the waferboard bonded with acid catalyzed resin adhesive derived from the hemicellulose hydrolysis. These superior physical properties also indicate that the acid catalyzed resin adhesive is more reactive, than non-acidified adhesive, with a faster curing rate. In terms of economic efficiency, acid catalyzed poplar saw dust yielded 37% more resin adhesives in comparison to non acidified poplar sawdust.

### Example 2

This example illustrates the effect of acid catalyst on the physical properties of MDF made with a mixture of Western red Cedar and Hemlock mill residue.

Fresh Western red Cedar shavings (60 % O.D. weight), and Hemlock planer shavings (40 %, O.D. weight), with a M.C. of about 35 % to 50 %, were mixed to provide fibre furnish for the MDF. The mixtures were divided into seven equal groups for steam treatment under varying conditions, using different steam temperatures and times. The first three groups were control groups, the first group of which were steamed at a steam temperature of 240 °C (32 bar or 470 psi) for 45 seconds. The second and third control groups were steamed at 184 °C (10 bar or 145 psi) for 6 and 12 minutes respectively. The remaining four groups were sprayed with dilute H₂SO₄ to contain 0.1, 0.2, 0.3 and 0.4% H₂SO₄ based on O.D. weight of the mixture. After spraying, the M.C. of the mixed planer shavings was increased to about 55 % to 70 %. Acid would quickly and easily penetrate throughout planar shavings because they are very thin. All four groups treated with the dilute H₂SO₄ solution were immediately steamed in separate batches at 184 °C (10 bar or 145 psi) for 6 minutes. All seven groups of steamed shavings were refined in a 36 inch Bauer disc refiner, to convert the material into fibres. The refining was performed under atmospheric pressure and 1.5 % emulsified paraffin wax was added to the fibre during refining. After refining, the fibre furnish was dried to about 3 - 5 % M.C. for fabrication of MDF. One panelboard (600 x 600 x 12.5 mm) was made from each group of fibre furnish with a target density of 800 kg/M³. One set of press conditions, consisting of 230 °C platen temperature, 10 minute pressing time and an initial pressure of 22 kg/cm² was used for all seven panelboards. Test results from seven individual MDF are recorded in Table 3.

**Table 3**

| Physical Properties of 12.5 mm MDF made with Cedar and Hemlock fiber with and without acid catalyst (press temperature 230 °C, press time 10 minutes) | | | | | | | | |
|---|---|---|---|---|---|---|---|---|
| Board | Steam condition | Board density | MOR | | MOE | IB | Thickness swelling | |
| ID | [°C & time] | | dry | wet | | | soak | boil |
| | | [kg/M³] | [MPa] | [MPa] | [MPa] | [kPa] | [%] | [%] |
| No acid catalyst with different steam temperatures and times | | | | | | | | |
| 1 | 240 °C/45" | 824 | 24.5 | 12.2 | 3670 | 810 | 10.9 | 19.2 |
| 2 | 184 °C/12' | 811 | 22.5 | 11.7 | 3140 | 790 | 11.6 | 24.6 |
| 3 | 184 °C/6' | 802 | 16.7 | DEL | 1860 | 220 | 93.2 | DEL |

| Acid catalyst with steam temperature of 184 °C for 6 minutes | | | | | | | | |
|---|---|---|---|---|---|---|---|---|
| | 184 °C/6' % of acid | | | | | | | |
| 4 | 0.1 | 817 | 19.7 | 5.6 | 2740 | 350 | 22.3 | 98.2 |
| 5 | 0.2 | 808 | 23.8 | 12.4 | 3420 | 870 | 10.2 | 21.7 |
| 6 | 0.3 | 804 | 21.2 | 13.3 | 3560 | 830 | 8.4 | 17.2 |
| 7 | 0.4 | 812 | 14.7 | 9.2 | 2670 | 840 | 6.2 | 14.5 |

The physical properties of MDF made with acidified and non-acidified fibres, except for boards ID # 3 and 7, in general, were very comparable. However, the colour and odour of the acidified MDF were much lighter in comparison to the non-acidified MDF. It appears that the intensity of colour and odour is closely related to the degree of acidification. The highly acidified fibre resulted in MDF with lighter colour and far less odour, which is more commercially desirable.

There was a similar correlation between acid content and thickness swelling; the higher the acid content, the lower the thickness swelling. It is believed that the residual acid in the steam treated lignocellulosic contributed greatly to the low swelling of the MDF and fast cure of the resin bond. Among the four MDF panels made with fibres catalyzed with different levels of H₂SO₄, the 0.4% acid catalyzed (the highest amount), produced MDF with the lightest colour and the least odour. These findings are surprising because one would expect more intense odour and darker colour with the increased hydrolysis of the acidified material. The usual faint sweet odour was not detected; however, the bending strength of this highly acidified panel was relatively weak in comparison to MDF made with less acidified fibres. The low bending strength seems to result from excessive hydrolysis promoted by the high content of sulfuric acid that causes random scission of the crystalline chain in the cellulose fibre, or reduces the degree of polymerization (DP) of the cellulose crystalline. It was also found that the MDF made with higher content of acid catalyst possess better machinability, i.e., cutting, sawing, and routing characteristics. Good machinability is an important requirement for MDF used in furniture manufacturing. By controlling the amount of acid catalyst, it is possible to produce a panelboard with specifically desired characteristics to suit the end use.

### Example 3

This example demonstrates the use of gaseous sulfur dioxide (SO₂) as an acid catalyst for hydrolysis of Poplar sawdust (3.2 mm mesh size) and the use of short press time to make MDF.

SO₂ impregnation was performed by passing anhydrous SO₂ gas into a plastic bag containing fresh Poplar sawdust. The absorption of SO₂ (about 1.8% SO₂ based on O.D. weight Poplar sawdust) was determined by the weight of the bag of Poplar sawdust before and after addition of SO₂. The absorption was rapid and uniform. The acid impregnated sawdust was immediately steam treated at 220 °C for 2 minutes. For purposes of comparison, identical Poplar sawdust, without the addition of SO₂ was also steamed at 220 °C for 2 minutes. The acidified and non-acidified saw dust were refined into fibre in separate batches and dried to a M.C. of about 5 %. The dried fibres were ready for fabrication of 8 mm MDF. The fibres were formed into mats and hot pressed at 190 °C for 2 minutes and the hot board followed by oven heated at 180 °C for 2 hours.

When compared with sulfuric acid, SO₂ may act as a weak acid by simply dissolving in the water, contained in the fresh Poplar sawdust to form sulphurous acid, or it may react with oxygen of any air present, to produce sulfuric acid. It may react with the lignin decomposition prodcuts to form lignosulphonates which are very strong acids, or it may act in both these ways to promote hydrolysis. The formation of lignosulphonates may enhance the bonding capabilities of the fibres as lignosulphonates are known to have adhesive qualities. The ease by which gaseous SO₂ can be added to wood and the quick penetration and even distribution of the gas makes this very practical for industrial application. In contrast, sulfuric acid impregnation is a difficult procedure, as sulfuric acid is a more corrosive chemical to handle and results in wetter wood substrates. Water in the sawdust consumes a large portion of the thermal energy required for the hydrolysis. By using SO₂, higher water content in the sawdust can be avoided, thus reducing energy consumption.

Test results for the 8.0 mm MDF are listed in table 4, showing a significant difference in physical properties between the MDF made from the acidified and non-acidified fibres.

**Table 4**

| Physical properties of 8.0 mm MDF made with Poplar fiber with and without SO₂ catalyst (press temperature 190 °C, press time 3 minutes and post oven heating at 180 °C for two hours) | | | | | | | | |
|---|---|---|---|---|---|---|---|---|
| | Steam condition | Board density | MOR | | MOE | IB | Thickness swelling | |
| | [minute] | [kg/M³] | dry | wet | | | soak | boil |
| | | | [MPa] | [MPa] | [MPa] | [kPa] | [%] | [%] |
| No acid | 220 °C/2 min | 804 | 18.2 | 0.0 | 2460 | 410 | 67.4 | DEL |
| 1.8 % SO₂ | 220 °C/2 min | 810 | 26.2 | 10.7 | 3820 | 860 | 14.2 | 31.6 |

The physical properties of MDF made with acidified fibre, are better than those of the MDF made with non-acidified fibre, particularly with regard to internal bond strength, wet bending strength and thickness swelling. It should be appreciated that the SO₂ catalyzed board required much shorter press time when followed with a shorter post-oven heat treatment to achieve a boil resistant bond. In commercial production shorter press time, in combination with a post-heat treatment, represents a significant reduction in production cost.

### Example 4

This example demonstrates a method to further lighten the colour and eliminate the odour of MDF by selective acidification of raw material prior to steam hydrolysis and refining.

A mixture of Western red cedar and Hemlock planer shavings, used in Example 2, was treated with 0.3% H₂SO₄ in a dilute solution. The acidified material was mixed thoroughly with non-acidified material of Western red Cedar and Hemlock planer shaving at three different ratios of 70:30, 60:40 and 50:50 with the major portion being the acidified material in each case. The mixed material was steam treated at 184 °C for 6 minutes and refined to fibres. The fibres were dried to 3 - 5 % M.C. and processed into MDF panels according to the procedure described in Example 2. One panel was made from each of the three fibre mixtures. Test results, including one panel made from 100 % acidified material (0.3 % H₂SO₄) from Example 2, are summarized in the Table 5.

**Table 5**

| Physical properties of 12.5 mm MDF made from mixed acidified fiber consisting of a mixture of acidified and non-acidified Cedar and Hemlock shavings and sawdust | | | | | | | |
|---|---|---|---|---|---|---|---|
| Board ID | Board density | MOR | | MOE | IB | Thickness | Odour |
| [acid/non-acid] | [kg/M³] | dry | wet | | | swelling | |
| | | [MPa] | [MPa] | [MPa] | [kPa] | [%] | |
| 0.3 % acid | | | | | | | |
| 100:0 | 804 | 21.2 | 13.3 | 3860 | 680 | 8.4 | faint |
| 70:30 | 812 | 22.6 | 14.2 | 3940 | 660 | 9.1 | none |
| 60:40 | 807 | 23.1 | 13.5 | 3860 | 620 | 10.6 | none |
| 50:50 | 815 | 23.8 | 12.2 | 3620 | 620 | 13.3 | none |

It can be seen from Table 5 that the physical properties of MDF made from a mixture of acidified and non-acidified fibre are very similar to those made with the acidified fibre alone, except for some variations in thickness swelling.

Of particular interest, the usual faintly sweet odour appears to be virtually non-existent in the MDF that contains a mixture of non-acidified and acidified fibre.

### Example 5

This example describes a method of producing both liquid and powder thermosetting resin adhesives from the acid catalyzed and hydrolyzed hemicellulose portion of lignocellulose.

Dry cotton stalks with rind were chopped and hammer milled to pass 1/4" (6.4mm) screen. The first batch of the cotton stalks was treated with dilute solution to contain 4% (NH₄)₂SO₄ and second batch was untreated. Both batches of cotton stalks were steamed at 220 °C for 90 seconds and instantly released from the pressure vessel with an explosive discharge. The explosive discharge rendered cotton stalk into fibrous and particulate form. The hydrolyzed cotton stalks, which contained about 18 - 24 % water solubles, and a M.C. of more than 100 %, were eluted with hot water to extract about 6.0% water solubles. The water solubles thus obtained were evaporated under vacuum to a concentration of about 50% solids and used for bonding foundry sands.

Two 60 gram samples of the liquid adhesive, acidified and non-acidified, with a solids content of 50 % were mixed, respectively, with 2 kg of AFS GEN 60 sand (1.5 % resin content). The resin coated sand was then used to produce 6.3 mm thick tensile specimens (dog bones) by heating hand rammed sand between a pair of hot plates at 250 °C for various times to cure and thermoset the resin. All heated solids turned dark brown or black in colour.

Edge retention and surface definition appeared normal. Test results of tensile strength, curing time, and resin types, including a commercial resin, are summarised in Table 6.

**Table 6**

| Curing time and tensile strength of foundry sand composite using acidified and non-acidified liquid resin from cotton stalks | | |
|---|---|---|
| Curing time at 250 °C | Tensile strength | |
| [minutes] | [kPa] | |
| | Control | Acid catalyzed |
| 2 | 656 | 693 |
| 4 | 682 | 728 |
| 6 | 705 | 755 |
| Commercial resin | 700 | |

These test results indicate the potential of using the liquid resin adhesive extracted from the hydrolyzed cotton stalks for bonding foundry sand.

The residue of the acid and non-acid catalyzed and hydrolyzed cotton stalks, from which about 6 % water soluble resin material from hemicellulose hydrolysis had been extracted, was dried to less than 4 % M.C., then ground and pulverized to fine particles to pass a 100 mesh screen. This fine powdery material consists of water soluble resin material and solid residue of the hydrolyzed lignocellulose. It has unique dual characteristics as it provides both bonding and filling functions in the production of composite products. This powdery resin material can be used alone or mixed with other base filler material in the production of composite products.

The resin particles in powder form derived from both acid and non-acid catalyzed cotton stalks were mixed respectively with dry, pine wood flour of 40 mesh size at a 50:50 ratio by O.D. weight basis. These mixtures were compressed and moulded separately into a donut shape frame at a temperature of 215 °C. The moulded frame made with acid catalyzed cotton stalks had a density of 1120 kg/M³ with very tight smooth surfaces and edges. The tension perpendicular to surface strength or internal bond was 1230 kPa and it was resistant to boiling water, with less than 12 % thickness swelling after 24 hour cold water soaking. The moulded frame made with non-acid catalyzed and hydrolyzed cotton stalk disintegrated in boiling water.

### Example 6

This example demonstrates a method of converting the cellulose fraction of lignocellulosic material, preferably with lignocellulosic material from which the hemicellulose fraction has been removed, into thermosetting adhesive in both liquid and solid form, thus achieving full utilization of the lignocellulosic material.

The hydrolyzed Aspen poplar sawdust residue, which was impregnated with 0.2 % H₂SO₄ and steamed at 220 °C for 90 seconds and from which the water solubles derived from hemicellulose hydrolysis had been removed, was used as base material. This previously hydrolyzed residue, which consisted mainly of cellulose (about two thirds), insoluble lignin (one third) and a very minor portion of hemicellulose residue, was impregnated with dilute sulfuric acid to contain 1 gram of H₂SO₄ in 100 grams of oven-dry sawdust and steamed at 180 °C for 90 minutes. The treatment rendered about 50 % of the residue material solubilized. If a high yield of water soluble resin material from cellulose hydrolysis is desired, a multi-stage acid hydrolysis should be used. About 50 % of the water soluble resin material was extracted and concentrated as liquid thermosetting resin adhesive. This resin material was of a very similar adhesive quality to that derived from hemicellulose hydrolysis and can be used alone or mixed with resin material derived from hemicellulose hydrolysis as thermosetting adhesive. The remaining residue, which consisted mainly of lignin decomposition products, cellulose residues and water solubles, was dried to 3 - 4 % M.C. and then pulverized and ground to fine powder (<100 mesh). The dried residue was friable and therefore easily pulvcrized. These powdered resin particles have similar bonding and filling capabilities to the powdered resin particles derived from hemicellulose hydrolysis, as described in Example 6, that are particularly well suited for the production of moulded products.

The conversion of the major portion of the previously hydrolyzed Aspen poplar sawdust into fine powder resin particles is essential in achieving the full utilization of lignocellulosic material. Especially from an environmental point of view, the remaining lignin and cellulose residue, if not incorporated into the production of resin adhesive particles, would certainly create a disposal problem. This would also require a secondary treatment to the lignin and cellulose residue prior to discharge.

### Example 7

This example demonstrates a simple and effective method of selectively applying acidic catalyst to poplar and pine chips, resulting in a stronger MDF.

A mixture of fresh poplar (80 %) and pine (20 %) chips were divided into two groups. The first group of mixed chips was impregnated under vacuum with dilute sulfuric acid to contain 0.2 % of H₂SO₄, by O.D. weight of chips. The impregnation was for 24 hours to ensure that the acid uniformly and thoroughly penetrated the chips. After 24 hours impregnation the chips were fed into a digester and cooked at a steam temperature of 10 bar (184 °C) for approximately 10 minutes and refined into fibres. The second group of chips were continuously sprayed with dilute H₂SO₄ as the chips entered the digester. Steam pressure was maintained at 10 bars (184 °C) and the retention time of the chips in the digester was approximately 10 minutes. After cooking the chips passed through a pressurized refiner with the addition of 1.0 %, solids basis, molten paraffin wax and converted into fibres. The two groups of fibres produced with different methods of acid applications were dried and processed into 12.5 mm MDF using identical press conditions. Board results are summarized in Table 7.

**Table 7**

| Physical properties of 12.5 mm MDF made from two distinct methods of application of acid | | | | | | | |
|---|---|---|---|---|---|---|---|
| Fiber Treatment | Board density | MOR | MOE | IB | Hardness | Screw Holding | Swell |
| | [kg/M³] | [MPa] | [MPa] | [kPa] | [kPa] | [kPa] | [%] |
| 0.2 % H₂SO₄ | 812 | 24.6 | 3640 | 810 | 3890 | 1180 | 8.7 |
| impregnation | | | | | | | |
| 0.2 % H₂SO₄ | 803 | 27.2 | 4820 | 790 | 4720 | 1370 | 9.1 |
| "in situ spray" | | | | | | | |

As can be seen from Table 7, the mechanical properties of the 12.5 mm MDF made with "in situ" acid application are considerably higher than the MDF made with the acid impregnation method. Although approximately 0.2 % H₂SO₄ was added to both fibers and they received the same degree of steam treatment, and processed into MDF with identical pressing conditions, the differences in the mechanical strength are remarkable. Additionally, the MDF made with "in situ" catalyst fiber appeared to be lighter in colour and less odourous. It is understood that "in situ" application of acid under steam pressure allows the acid to penetrate into the chip in a manner by which it can form a gradient with more acid in the surface and less acid in the core of the chips. The inner part or core part of the chip has less acid which would decrease the degree of hydrolysis, or cause less damage to the cellulose portion of the fibers. When the chips are processed into fiber by refining and mixing, the less cooked fibers result in a stronger MDF.

## Claims

1. A method for the treatment of subdivided or particulate lignocellulosic material under circumstances sufficient to effect decomposition and hydrolysis of hemicellulose but not any of the further components cellulose and the lignin fraction, consisting of a first treatment of the lignocellulosic material with an acid catalyst selected from the group consisting of acids and sulfur dioxide, and a second treatment with steam,
wherein the acid is sulfuric acid in an amount of 0.05 to 0.35 % or sulfur dioxide in an amount of 0.5 to 5 %,
all amounts relative to the dry weight of the lignocellulosic material.

2. The method according to claim 1, wherein the acid catalyst is mixed in such an amount as to provide a pH-value within a range of 1.0 to 5.0.

3. The method according to claim 2, wherein the provided pH-value is in the range of 2.0 to 4.5.

4. The method according to claim 3, wherein the provided pH-value is in the range of 2.5 to 3.5.

5. The method according to any of claims 1 to 4, wherein the steam treatment is performed at a temperature not exceeding 220 °C.

6. The method according to claim 5, wherein the temperature is not exceeding 210 °C.

7. The method according to any of the previous claims, wherein the steam treatment is carried out for a time not exceeding 90 minutes.

8. A method for the treatment of subdivided or particulate lignocellulosic material prepared according to any of claims 1 to 7, whereby a water-soluble fraction is optionally being separated from the subdivided or particulate lignocellulosic material before the beginning of the treatment, consisting of a first treatment of the lignocellulosic material with a product selected from the group consisting of acids, sulfur dioxide and acid salts,
and a second treatment with steam,
wherein the acid is sulfuric acid in an amount of 0.5 to 5 %, another acid in an equivalent amount, sulfur dioxide in an amount of 0.5 to 5 % or ammonium sulfate in an amount of 0.1 to 10 %,
all amounts relative to the dry weight of the lignocellulosic material.

9. Subdivided or particulate lignocellulosic material prepared with the method of any of claims 1 to 8.

10. A liquid resin adhesive prepared from the separated, water soluble material obtained in any of claims 1 to 8, by a concentrating step under vacuum until a final solids content of about 50 to 55 %.

11. Use of the liquid resin adhesive of claim 10 as a thermosetting resin adhesive.

12. Subdivided or particulate lignocellulosic material comprising the material of claim 9 mixed before the second treatment with steam according to the definition of any of claims 1 to 8, with untreated subdivided or particulate lignocellulosic material.

13. Pulverised extracted material obtained by the steps of the method according to any of claims 1 to 8, separating the water-soluble fraction, drying the water-soluble fraction and pulverising the dried water-soluble fraction.

14. Use of the pulverised extracted material of claim 13 alone or mixed with other base filler material for the production of composite products.

15. A method for the treatment of subdivided or particulate lignocellulosic material consisting of a first treatment of the lignocellulosic material with a product selected from the group consisting of acids, sulfur dioxide and acid salts,
and a second treatment with steam,
wherein the added product is applied to the lignocellulosic material in subdivided or particulate form prior to and/or during decomposition and hydrolysis,
the lignocellulosic material remains in contact with the added product prior to and/or during decomposition and hydrolysis for a time insufficient to allow the acid to penetrate the core of the particles of lignocellulosic material before cessation of the decomposition and hydrolysis, so that the cellulose fibres in the core of the particles are not substantially degraded by the steam treatment.

16. The method of claim 15, wherein the added product is applied to the lignocellulosic material by soaking the particles in solution of the added product or spraying the particles with a solution of the added product

17. The method of claim 15 or 16, wherein the added product is sulfuric acid in an amount of 0.05 to 0.35 %, another acid in an equivalent amount, sulfur dioxide in an amount of 0.5 to 5 % or ammonium sulfate in an amount of 0.1 to 10 %,
all amounts relative to the dry weight of the lignocellulosic material.

## Patentansprüche

1. Verfahren für die Behandlung von zerteiltem oder partikelförmigem Lignocellulosematerial unter Bedingungen, die ausreichend sind, um die Zersetzung und Hydrolyse der Hemicellulose, jedoch nicht der anderen Bestandteile der Zellulose und der Ligninfraktion zu bewirken, die aus einer ersten Behandlung des Lignosematerials mit einem sauren Katalysator besteht, die aus der Gruppe ausgewählt wird, die aus Säuren und Schwefeldioxid besteht, sowie aus einer zweiten Behandlung mit Dampf besteht, bei der die eingesetzte Säure eine Schwefelsäure in einer Menge zwischen 0,05 und 0,35 %, oder ein Schwefeldioxid in einer Menge zwischen 0,5 und 5 % ist, wobei die genannten Mengen auf das Trockengewicht des Lignosematerials bezogen sind.

2. Verfahren nach Anspruch 1,
**dadurch gekennzeichnet, dass**
der Katalysator in einer Menge beigemischt wird, die einen pH-Wert in einem Bereich zwischen 1,0 und 5,0 gewährleistet.

3. Verfahren nach Anspruch 2,
**dadurch gekennzeichnet, dass**
der pH-Wert in einem Bereich zwischen 2,0 und 4,5 liegt.

4. Verfahren nach Anspruch 3,
**dadurch gekennzeichnet, dass**
der pH-Wert in einem Bereich zwischen 2,5 und 3,5 liegt.

5. Verfahren nach einem der Ansprüche 1 bis 4,
**dadurch gekennzeichnet, dass**
die Dampfbehandlung bei einer Temperatur durchgeführt wird, die nicht über 220° C liegt.

6. Verfahren nach Anspruch 5,
**dadurch gekennzeichnet, dass**
die Temperatur nicht über 210° C liegt.

7. Verfahren nach einem der vorausgegangenen Ansprüche,
**dadurch gekennzeichnet, dass**
die Dampfbehandlung über einen Zeitraum von 90 Minuten durchgeführt wird.

8. Verfahren für die Behandlung von zerteiltem oder partikelförmigem Lignosecellulosematerial, das nach einem der Ansprüche 1 bis 7 hergestellt worden ist,
**dadurch gekennzeichnet, dass**
eine wasserlösliche Fraktion wahlweise aus dem zerteilten oder partikelförmigen Lignosecellulosematerial vor dem Beginn der Behandlung abgetrennt wird, und das aus einer ersten Behandlung des Lignocellulosematerials mit einem Produkt besteht, das aus der Gruppe ausgewählt wird, die Säuren, Schwefeldioxid und saure Salze umfasst, und einer zweiten Behandlung mit Dampf besteht, bei der die Säure in einer Menge zwischen 0,5 und 5 %,, eine andere Säure in der gleichen Menge, Schwefeldioxid in einer Menge zwischen 0,5 und 5 %, und Ammoniumsulfat in einer Menge zwischen 0,1 und 10 % beigemischt wird, wobei alle genannten Mengen auf das Trockengewicht des Lignosematerials bezogen sind.

9. Zerteiltes oder partikelförmiges Lignosecellusematerial,
**dadurch gekennzeichnet, dass**
es nach einem der Verfahren der Ansprüche 1 bis 8 hergestellt worden ist

10. Flüssiger Harzkleber, der aus dem abgetrennten wasserlöslichen Material nach einem der Ansprüche 1 bis 8 hergestellt worden ist,
**dadurch gekennzeichnet, dass**
ein Schritt für die Konzentration unter Vakuum vorgesehen ist, bis ein endgültiger Gehalt von Feststoffen zwischen etwa 50 und 55 % erreicht worden ist.

11. Verwendung des flüssigen Harzklebers nach Anspruch 10 als thermoplastischer Klebstoff.

12. Zerteiltes oder partikelförmiges Lignocellulosematerial, welches das Material nach Anspruch 9 enthält,
**dadurch gekennzeichnet, dass**
es vor der zweiten Behandlung mit Dampf nach der Definition der Ansprüche 1 bis 8 mit unbehandeltem zerteiltem oder partikelförmigern Lignosecellulosematerial vermischt wird.

13. Pulverförmiges extrahiertes Material, das nach den Verfahrensschritten nach einem der Ansprüche 1 bis 8 hergestellt worden ist,
**dadurch gekennzeichnet, dass**
die wasserlösliche Fraktion abgetrennt und anschließend diese wasserlösliche Fraktion getrocknet und diese getrocknete wasserlösliche Fraktion pulverisiert wird.

14. Verwendung des pulverisierten extrahierten Materials nach Anspruch 13,
**dadurch gekennzeichnet, dass**
es allein oder zusammen mit anderen Füllermaterialien für die Herstellung von Verbundwerkstoffen eingesetzt wird.

15. Verfahren für die Behandlung von zerteiltem oder partikelförmigen Lignocellusosematerial, das aus einer ersten Behandlung des Lignocellusosematerials mit einem Produkt besteht, das aus der Gruppe ausgewählt wird, die Säuren, Schwefeldioxid und saure Salze enthält, sowie aus einer nachfolgenden Dampfbehandlung,
**dadurch gekennzeichnet, dass**
das dem Lignocellulosematerial beigemischte Produkt in einer zerteilten oder partikelförmigen Form vor und/oder während der Zersetzung und Hydrolyse angewendet wird, wobei das Lignocellulosematerial mit dem beigemischten Produkt vor und/oder während der Zersetzung und Hydrolyse über einen Zeitraum in Kontakt bleibt, die nicht ausreicht, damit die Säure in den Kern der Partikel des Lignosecellusomaterials eindringen kann, bevor die Zersetzung und Hydrolyse abgeschlossen ist, so dass die Zellulosefasem in dem Kern nicht wesentlich durch die Dampfbehandlung beschädigt werden können.

16. Verfahren nach Anspruch 15,
**dadurch gekennzeichnet, dass**
das dem Lignocellulosematerial beigemischte Produkt durch Imprägnierung der Partikel mit einer Lösung aus dem beigemischten Produkt oder durch Besprühen der Partikel mit einer Lösung des beigemischten Produktes aufgetragen wird.

17. Verfahren nach einem der Ansprüche 15 oder 16,
**dadurch gekennzeichnet, dass**
das beigemischte Produkt aus einer Schwefelsäure in einer Menge zwischen 0,05 und 0,35 %, einer anderen Säure in einer entsprechenden Menge, aus Schwefeldioxid in einer Menge zwischen 0,5 und 5 %, oder einem Ammoniumsulfat in einer Menge zwischen 0,1 und 10 % besteht, wobei diese Mengen auf das Trockengewicht des Lignocellulosematerials bezogen sind.

## Revendications

1. Procédé pour le traitement d'une matière lignocellulosique particulaire ou subdivisée dans des circonstances suffisantes pour effectuer la décomposition et l'hydrolyse de l'hémicellulose mais pas d'autres composants cellulosiques et de la fraction de lignine, qui comprend un premier traitement de la matière lignocellulosique avec un catalyseur acide choisi dans le groupe comprenant des acides et le dioxyde de soufre, et un second traitement avec de la vapeur,
dans lequel l'acide est l'acide sulfurique en une quantité de 0,05 à 0,35 % ou le dioxyde de soufre en une quantité de 0,5 à 5 %, toutes les quantités étant données par rapport au poids sec de la matière lignocellulosique.

2. Procédé selon la revendication 1, dans lequel le catalyseur acide est mélangé en une quantité telle qu'il offre une valeur de pH comprise dans l'intervalle de 1,0 à 5,0.

3. Procédé selon la revendication 2, dans lequel la valeur de pH fournie se situe dans l'intervalle allant de 2,0 à 4,5.

4. Procédé selon la revendication 3, dans lequel la valeur de pH fournie se situe dans l'intervalle allant de 2,5 à 3,5.

5. Procédé selon l'une quelconque des revendications 1 à 4, dans lequel le traitement à la vapeur s'effectue à une température n'excédant pas 220°C.

6. Procédé selon la revendication 5, dans lequel la température n'excède pas 210°C.

7. Procédé selon l'une quelconque des revendications précédentes, dans lequel le traitement à la vapeur s'effectue pendant une durée n'excédant pas 90 minutes.

8. Procédé pour le traitement d'une matière lignocellulosique particulaire ou subdivisée préparée selon l'une quelconque des revendications 1 à 7, par lequel on sépare éventuellement une fraction soluble dans l'eau d'avec la matière lignocellulosique particulaire ou subdivisée avant le début du traitement, qui comprend un premier traitement de la matière lignocellulosique avec un produit choisi dans le groupe comprenant des acides, le dioxyde de soufre et des sels acides, et un second traitement avec de la vapeur,
dans lequel l'acide est l'acide sulfurique en une quantité de 0,5 à 5 % , un autre acide en une quantité équivalente, le dioxyde de soufre en une quantité de 0,5 à 5 % ou le sulfate d'ammonium en une quantité de 0,1 à 10 %,
toutes les quantités étant données par rapport au poids sec de la matière lignocellulosique.

9. Matière lignocellulosique particulaire ou subdivisée préparée avec un procédé selon l'une quelconque des revendications 1 à 8.

10. Adhésif de résine liquide préparé à partir de la matière soluble dans l'eau, séparée, obtenue dans l'une quelconque des revendications 1 à 8, par une étape de concentration sous vide jusqu'à une teneur finale en matières solides d'environ 50 à 55 %.

11. Utilisation de l'adhésif de résine liquide selon la revendication 10, à titre d'adhésif thermodurcissable.

12. Matière lignocellulosique particulaire ou subdivisée comprenant la matière de la revendication 9 mélangée avant le second traitement avec la vapeur selon la définition de l'une quelconque des revendications 1 à 8, avec de la matière lignocellulosique particulaire ou subdivisée non traitée.

13. Matière extraite pulvérisée obtenue par les étapes du procédé selon l'une quelconque des revendications 1 à 8, en séparant la fraction soluble dans l'eau, en séchant la fraction soluble dans l'eau et en pulvérisant la fraction soluble dans l'eau séchée.

14. Utilisation de la matière extraite pulvérisée selon la revendication 13 seule ou en mélange avec un autre matériau de charge de base pour la production de produits composites.

15. Procédé pour le traitement d'une matière lignocellulosique particulaire ou subdivisée qui comprend un premier traitement de la matière lignocellulosique avec un produit choisi dans le groupe comprenant des acides, le dioxyde de soufre et des sels acides, et un second traitement avec de la vapeur, dans lequel le produit ajouté est appliqué à la matière lignocellulosique sous une forme particulaire ou subdivisée avant et/ou pendant la décomposition et l'hydrolyse,
la matière lignocellulosique reste en contact avec le produit ajouté avant et/ou pendant la décomposition et l'hydrolyse pendant un temps insuffisant pour permettre à l'acide de pénétrer le coeur des particules de la matière lignocellulosique avant la cessation de la décomposition et de l'hydrolyse, de telle sorte que les fibres de cellulose dans le coeur des particules ne sont pratiquement pas dégradées par le traitement à la vapeur.

16. Procédé selon la revendication 15, dans lequel le produit ajouté est appliqué à la matière lignocellulosique en trempant les particules dans la solution du produit ajouté ou en pulvérisant les particules avec une solution du produit ajouté.

17. Procédé selon la revendication 15 ou 16, dans lequel le produit ajouté est l'acide sulfurique en une quantité de 0,05 à 0,35 %, un autre acide en une quantité équivalente, le dioxyde de soufre en une quantité de 0,5 à 5% ou le sulfate d'ammonium en une quantité de 0,1 à 10 %, toutes les quantités étant données par rapport au poids sec de la matière lignocellulosique.
